# EUROPÄISCHE PATENTANMELDUNG

(11) **EP 1 275 625 A2**
(43) Veröffentlichungstag der Anmeldung: **15.01.2003**
(21) Anmeldenummer: 02090229.2
(22) Anmeldetag: 03.07.2002
(51) Int. Cl.: C04B 24/36, C08L 95/00

(54) **Bitumenemulsion**

(30) Priorität: 11.07.2001 DE 10135096; 13.07.2001 DE 10134765
(71) Anmelder: Kämereit, Wilhelm, Dipl.-Ing., 40229 Düsseldorf (DE); CTW- Strassenbaustoffe AG, 4132 Muttenz 1 (CH)
(72) Erfinder: Kämereit, Wilhelm, 40229 Düsseldorf (DE); Grimm, Claude, 2935 Beurnevésin (CH)
(74) Vertreter: Meissner, Peter E., Dipl.-Ing.

(57) **Zusammenfassung**

Die Erfindung betrifft eine Bitumenemulsion zur Anwendung bei Kaltbauweisen im Mischverfahren,insbesondere als Bindemittel für Baustoffe oder zur Oberflächenbeschichtung. Diese enthält hydrophobierte Bestandteile, die von einer kolloidalen Dispersion eines Bitumens in wässrigem Medium umhüllt sind und weitere Bestandteile, wobei die Zusammensetzung so gewählt ist, dass neben einem bituminösen Bindemittel ein hydraulisches Bindemittel vorliegt, wobei die Wirkungsweise der Bindemittel stufenförmig einsetzt, wenn die Emulsion zerfällt, und der Zerfall erst einsetzt, wenn sie in Kontakt mit den zu verbindenden Materialoberflächen kommt und zusätzlich einer mechanischen Belastung ausgesetzt wird.

## Beschreibung

Die Erfindung betrifft eine Bitumenemulsion zur Anwendung bei Kaltbauweisen im Mischverfahren, insbesondere als Bindemittel für Baustoffe oder zur Oberflächenbeschichtung.

Die Bestrebungen, bei baulichen Veränderungen und Reparaturen, Altsubstanzen zu verwerten (Recycling), steigen ständig. Um diese verwenden zu können, müssen ihnen unterschiedliche Bindemittelarten zugesetzt werden. Da diese aber bezüglich ihrer Wirksamkeit von ihrem pH-Wert geprägt sind, ist es erstrebenswert, eine Bindemittelkombination mit möglichst gleichen Wirkanteilen hydraulischer und bituminöser Bindemittel verwenden zu können.

Neben dem diesbezüglichen Aufwand sind auch kostentreibende, getrennte Zwischenlagerungen der Altstoffe sowie gezielt anwendungstechnisch orientierte Bindemittellagerungen zu erfüllen.
Derartige Probleme sind zu bewältigen, wenn bei Abdichtungsaufgaben Kaltvergußmassen Anwendung finden oder im Straßenbau Kaltrecycling notwendig ist. In diesen Fällen kommt erschwerend hinzu, dass der Altasphalt kontaminiert sein kann z.B. mit karzinogenem Material wie Teer.

Die vorbeschriebenen Anwendungsbereiche von Bindemitteln sind Zielbereiche für die Bitumenindustrie. So gibt es dort Entwicklungen, die einer pH-Wert orientierten Vorklärung - und der den Baufortschritt begleitenden Überprüfung - nicht bedürfen. Bei Verwendung von Heißbitumen sucht man den entsprechenden Weg im Einsatz von Schaumbitumen und bei Kaltbauweisen in der Kombination von Zement mit Bitumenemulsion. Bei diesen Verfahren bestehen jedoch Anwendungsschwierigkeiten wie insbesondere begrenzte Lagerfähigkeit des Bindemittels oder Verdichtungsfähigkeit des Asphaltes.

Der Erfindung liegt die Aufgabe zugrunde, eine Bitumenemulsion zu schaffen, die die Eigenschaften von hydraulischen und bituminösen Bindemitteln vereint und dabei eine hohe Lagerstabilität aufweist.

Gelöst wird diese Aufgabe erfindungsgemäß dadurch, dass sie hydrophobierte Bestandteile enthält, die von einer kolloidalen Dispersion eines Bitumens in wässrigem Medium umhüllt sind und dass sie weitere Bestandteile enthält, wobei die Zusammensetzung so gewählt ist, dass neben einem bituminösen Bindemittel ein hydraulisches Bindemittel vorliegt, wobei die Wirkungsweise der Bindemittel stufenförmig einsetzt, wenn die Emulsion zerfällt, und der Zerfall erst einsetzt, wenn sie in Kontakt mit den zu verbindenden Materialoberflächen kommt und zusätzlich einer mechanischen Belastung ausgesetzt wird.

Die Erfindung zielt zum einen darauf ab, den Einsatz als Dichtmaterial für Fugen oder Risse in Bauteilen und zum anderen als Mörtelbestandteil für bituminöse Kaltbauweise Verwendung zu finden. Es kann eine hohe Lagerstabilität der gefüllten Emulsion erreicht werden, die erst durch Berührung mit Gesteinsmaterialien beendet wird. Die Charakteristik des Verdichtungsverhaltens ist dabei derart, dass sich zunächst die quasielastische Bindung des bituminösen Anteils aufbaut und erst bei hohem Druck und entsprechender Vorverdichtung schlagartig die quasistarre Bindung durch den hydraulischen Anteil eintritt.
Betrachtet man beispielsweise eine Bitumenemulsion, die als weiteren Bestandteil Zement enthält, so wird bei einer mechanischen Belastung wie einem Komprimieren und / oder einer Verdichtung zunächst die hydrophobierende Oberflächenschutzschicht zerstört, was im allgemeinen schlagartig erfolgt, und dann setzt bei Berührung der Zementpartikel mit Wasser die chemische Reaktion des Zements ein.

Weitere Ausgestaltungen ergeben sich aus den Unteransprüchen.

Erfindungsgemäß kommen hydrophobierte Bestandteile zum Einsatz. Hierunter werden beispielsweise aber nicht ausschließlich verstanden:
**G**esteinmehle: CaCO₃, SiO₂, feinverteilte Bentonite.
Anorganische **S**alze: CaO, Na₂CO₃, NaCI aus vermahlenem Steinsalz und / oder Siedesalz.
Pulverförmige **M**aterialien: Füller für den Straßenbau, Cellulose Fasern.

Mineralische **B**austoffe: Zement.

Zur Vereinfachung werden diese Bestandteile nachfolgend als GSMB Substanzen bezeichnet.

Die mit den hydrophobierten GMSB Substanzen gefüllte Bitumenemulsion kann als feine kolloidale Dispersion eines Bitumens in einem wässrigen Medium angesehen werden, wobei man je nach Teilchengröße unterscheiden kann zwischen einem molekulardispersen System oder einem grobdispersen System.

Um diese GMSB Substanzen zu hydrophobieren kann beispielsweise Magnesiumstearat verwendet werden. In einem geeigneten Mischgerät kann aus den GMSB Substanzen mit dem Magnesiumstearat eine pulverförmige, rieselfähige Mischung hergestellt werden.

Nachfolgend sollen die zur Erfindung führenden Versuchsergebnisse beschrieben werden:
a) Es wurde ein kolloidale Emulsion aus 50 M% Bitumen und 50 M% Wasser, mit Bentonit als anorganischem Emulgator und Ligninsulfonat als Dispergierhilfsmittel hergestellt.
b1) CaCO₃ wurde auf eine durchschnittliche Mahlfeinheit von 63 µm zerkleinert und mit Mg-Stearat (4 M% bezogen auf CaCO₃) hydrophobiert.
b2) Zement mit einer durchschnittlichen Mahlfeinheit von 20 µm wurde mit Mg-Stearat (4 M% bezogen auf Zement) hydrophobiert.
b3) CaO wurde auf eine durchschnittliche Mahlfeinheit von 30 µm zerkleinert und mit Mg-Stearat (4 M% bezogen auf CaO) hydrophobiert.
c1) Im Verhältnis 25 M% zu 75 M% wurde das hydrophobierte CaCO₃ mit der Bitumenemulsion gemischt.
c2) Im Verhältnis 20 M% zu 80 M% wurde der hydrophobierte CaO mit der Bitumenemulsion gemischt.
c3) Im Verhältnis 30M% zu 70M% wurde der hydrophobierte Zement mit der Bitumenemulsion gemischt.
d) Nach einer Lagerzeit von 12 Wochen wurden die gefüllten Emulsionen verarbeitet und zwar die:
   - CaCO₃-und CaO-Bitumenemulsion als Dichtungsmittel im Fügungsstoß
   - Zement-Bitumen-Emulsion als .Bindemittel zur Wiederverwendung von Asphalt im Kaltverfahren.

## Patentansprüche

1. Bitumenemulsion zur Anwendung bei Kaltbauweisen im Mischverfahren, insbesondere als Bindemittel für Baustoffe oder zur Oberflächenbeschichtung,
**dadurch gekennzeichnet,**
**dass** sie hydrophobierte Bestandteile enthält, die von einer kolloidalen Dispersion eines Bitumens in wässrigem Medium umhüllt sind und dass sie weitere Bestandteile enthält, wobei die Zusammensetzung so gewählt ist, dass neben einem bituminösen Bindemittel ein hydraulisches Bindemittel vorliegt, wobei die Wirkungsweise der Bindemittel stufenförmig einsetzt, wenn die Emulsion zerfällt, und der Zerfall erst einsetzt, wenn sie in Kontakt mit den zu verbindenden Materialoberflächen kommt und zusätzlich einer mechanischen Belastung ausgesetzt wird.

2. Bitumenemulsion nach Anspruch 1,
**dadurch gekennzeichnet,**
**dass** sie als weiteres Bindemittel Zement enthält.

3. Bitumenemulsion nach Anspruch 1 und 2,
**dadurch gekennzeichnet,**
**dass** sie Kalksteinmehl (CaCO₃) enthält.

4. Bitumenemulsion nach einem der vorstehenden Ansprüche,
**dadurch gekennzeichnet,**
**dass** das Hydrophobierungsmittel ein Stearat, insbesondere Magnesiumstearat ist.

5. Bitumenemulsion nach einem der vorstehenden Ansprüche,
**dadurch gekennzeichnet,**
**dass** die Mineralstoffe in einer Körnung vorliegen, die 60 µm, bevorzugt 70 µm nicht übersteigen.

6. Bitumenemulsion nach einem der vorstehenden Ansprüche,
**dadurch gekennzeichnet,**
**dass** als Emulgator Bentonit verwendet wird.

7. Bitumenemulsion nach einem der vorstehenden Ansprüche,
**dadurch gekennzeichnet,**
**dass** als Dispergierhilfsmittel Ligninsulfonat verwendet wird.
